# EUROPEAN PATENT SPECIFICATION

(11) **EP 3 067 770 B1**
(45) Date of publication and mention of the grant of the patent: **16.01.2019**
(21) Application number: 13897244.3
(22) Date of filing: 07.11.2013
(51) Int. Cl.: G05D 1/02, A61H 3/04

(54) **AUTOMATIC DRIVING SYSTEM AND AUTOMATIC TRAVEL MACHINE**
AUTOMATISCHES ANTRIEBSSYSTEM UND AUTOMATISCHE REISEMASCHINE
SYSTÈME DE PILOTAGE AUTOMATIQUE ET MACHINE DE TRANSPORT AUTOMATIQUE

(43) Date of publication of application: 14.09.2016
(73) Proprietor: FUJI Corporation, Chiryu Aichi (JP)
(72) Inventor: KODAMA, Seigo, Chiryu-shi, Aichi 472-8686 (JP); ISOZUMI, Joji, Chiryu-shi, Aichi 472-8686 (JP); NAKANE, Nobuyuki, Chiryu-shi, Aichi 472-8686 (JP)
(74) Representative: Grünecker Patent- und Rechtsanwälte PartG mbB
(86) International application number: PCT/JP2013/080070
(87) International publication number: WO 2015/068229

(56) References cited:
- EP-A2- 0 367 526
- WO-A1-02/23297
- WO-A1-02/23297
- JP-A- 2002 222 013
- JP-A- 2010 069 002
- JP-A- 2010 069 002
- JP-A- 2011 022 700
- US-A1- 2011 130 894
- US-A1- 2013 179 075

## Description

### Technical Field

The present invention relates to an automatic driving system that guides an automatic traveling machine which assists the movement of a care receiver to a target location, and an automatic traveling machine that performs automatic driving based on control of the automatic driving system.

### Background Art

Care receivers who find it difficult to move by themselves, such as those who have a walking impairment, would like to perform many everyday actions, such as moving from their bed to the toilet, without receiving assistance from a caregiver. For this need, there are support robots that assist the movement of care receivers (such as from patent literature 1). The support robot disclosed in patent literature 1 is provided with a holding section that holds a care receiver, and assists a care receiver to stand up from a bed by holding the chest of the care receiver with the holding section. The care receiver moves to a target location in the standing state they were in after receiving the assistance of the support robot.

### Citation List

### Patent Literature

Patent Literature 1: JP-A-2011-19571

Document US2011130894 discloses a system for remotely controlling a vehicle in a service area divided into plural service sectors including: an infra sensor module installed in each service sector for periodically sensing obstacles and vehicles within the service sector; a vehicle controller mounted in each vehicle for requesting the driving guidance service and automatically controlling the vehicle in accordance with a vehicle; control signal; and a local server installed in each service sector for communicating with the vehicle controllers through a driving guidance network based on information on the obstacles and vehicles sensed by the infra sensor module. The system further includes a global server for allocating network resources of the driving guidance network to allow the local server to communicate with the vehicle controllers using the allocated network resources.

### Summary of Invention

The present invention provides an automatic driving system according to claim 1.

### Technical Problem

Among traveling machines that assist the movement of a care receiver such as the above support robot, there are various kinds of devices, for example, the SENIORCAR (registered trademark), electric wheelchairs, and so on. However, with these types of traveling machine, for every device, if there is an obstacle on the moving path, the care receivers must think of a route to avoid the obstacle themselves and operate the traveling machine themselves. In other words, the care receiver is unable to judge the state and so on of an obstacle which is blocking the path without moving close to the obstacle using the traveling machine; thus, in order to avoid the obstacle, it becomes necessary to return by the path by which the care receiver came, or it is necessary to receive assistance from a caregiver to avoid the obstacle. This means that there is a demand among care receivers who use traveling machines to be able to perform everyday movements freely, without receiving assistance from caregivers or the like.

The present invention is made in view of the above, and an object thereof is to provide an automatic driving system and an automatic traveling machine that enable a care receiver who moves using a traveling machine to move to a target location without receiving assistance from a caregiver or the like.

### Solution to Problem

To solve the above problem, disclosed herein is an automatic driving system comprising: a monitoring device that is provided in each of multiple regions which are set inside an area, and that monitors an obstacle in the corresponding region; an area monitoring computer that is provided to correspond to the area, and that acquires obstacle information regarding the obstacle which is detected by each of the multiple monitoring devices; a wide-region monitoring network system that performs overall control of multiple of the area monitoring computers; and an automatic traveling machine that runs in the area, and that drives automatically avoiding the obstacle based on the obstacle information.

To solve the above problem, also disclosed herein is an automatic traveling machine that drives automatically based on control of an automatic driving system, wherein, in the automatic driving system, a monitoring device that is provided in each of multiple regions which are set inside an area monitors an obstacle in the corresponding region, an area monitoring computer acquires obstacle information relating to the obstacle detected by the monitoring device, overall control is performed of the multiple area monitoring computers by a wide-region monitoring network system, and the automatic traveling machine drives automatically avoiding the obstacle based on the obstacle information of the auto driving system.

### Advantageous Effects of Invention

According to the disclosures herein, it is possible to provide an automatic driving system and an automatic traveling machine that enable a care receiver who moves using a traveling machine to move to a target location without receiving assistance from a caregiver or the like.

### Brief Description of Drawings

Fig. 1 is a schematic diagram showing a care facility to which an embodiment of the automatic driving system disclosed is applied.
Fig. 2 is a plan view showing the residence of a residential building provided in the care facility.
Fig. 3 shows the system configuration of the automatic driving system.
Fig. 4 is a schematic drawing showing the configuration of the support robot and a care receiver receiving assistance from the support robot.
Fig. 5 shows a travel route set in advance by a healthy person.
Fig. 6 is a flowchart showing preset processing for a travel route.
Fig. 7 is a flowchart showing the processing performed with respect to the support robot moving to a target location.
Fig. 8 is a flowchart showing the processing performed with respect to the support robot moving to a target location.
Fig. 9 shows a travel route avoiding obstacles taken by a care receiver receiving assistance from a support robot.
Fig. 10 is a flowchart showing the processing performed with respect to the support robot moving to a target location across multiple areas.
Fig. 11 is a schematic drawing of areas set in residential buildings.
Fig. 12 shows a travel route for movement outdoors along a road from a care facility to a community facility.
Fig. 13 shows the configuration of an automatic driving system set on a road.

### Description of Embodiments

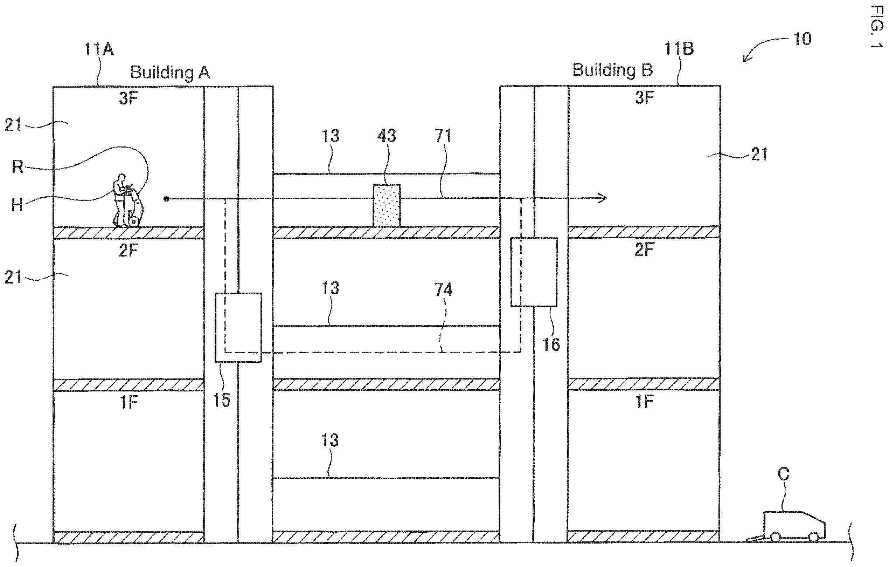

Hereinafter, the present invention is described with reference to the figures. Note that, for ease of understanding, the attached figures may not be drawn to scale. Fig. 1 shows care facility 10, which is an example of a facility to which the automatic driving system of the present embodiment may be applied. Multiple residential buildings 11A and 11B (in the drawing two buildings, building A and building B) are provided in the grounds of care facility 10. On each of the multiple floors (three floors are shown as an example in the drawing) of the residential building 11A and 11B, provided is a residence 21 for a care receiver H to reside in. Each care receiver H moves inside care facility 10 receiving assistance from a support robot R. Residential buildings 11A and 11B are connected to each other by corridor 13 which crosses each floor; it is possible for a care receiver H assisted by a support robot R to come and go between each residential building 11A and 11B. Also, elevators 15 and 16 for moving to each floor are provided in each residential building 11A and 11B.

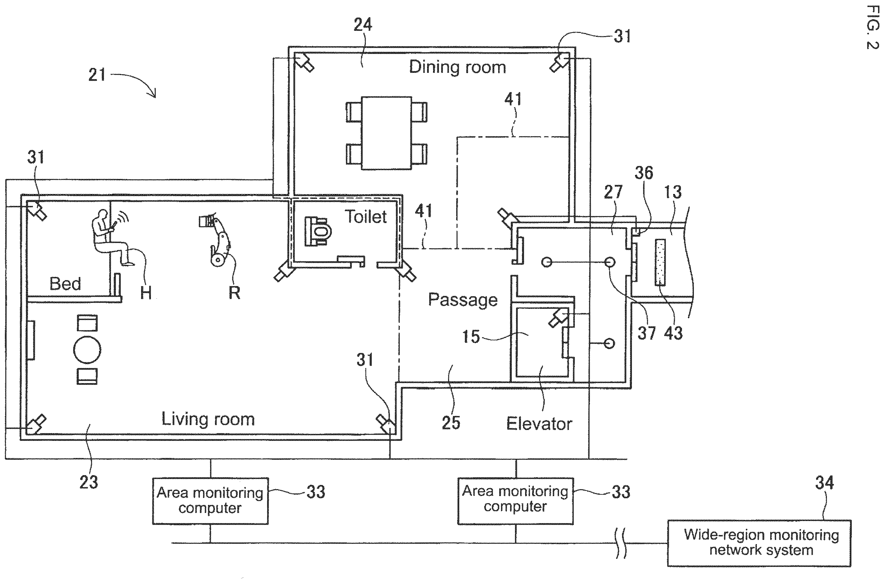

Fig. 2 shows living room 21 in which care receiver H resides. The configuration of residence 21 shown in fig. 2 is one example; the layout of, and furnishings and facilities provided in residence 21, and so on, may be changed as appropriate. Residence 21 has a layout in which living room 23 and dining room 24 are connected by passage 25. In residence 21, multiple monitoring devices 31 are provided in each of living room 23, dining room 24, passage 25, and so on. Each of the monitoring devices 31 is provided with, for example, a camera that monitors inside residence 21 in real time, and a processing board that processes the image data captured by the camera. Monitoring devices 31 are provided corresponding to multiple regions 41 (the regions in the drawing shown by the single-dot dashed lines) divided inside residence 21. The quantity of set regions 41 and monitoring devices 31 is set, for example, such that the monitoring devices 31 are capable of capturing regions inside residence 21 that cover substantially the entire region of residence 21, and such that monitoring devices 31 are capable of performing communication (wireless communication) with a support robot R in substantially the entire region of residence 21. Note that, to prevent fig. 2 becoming too complicated, only a portion of the regions 41 are shown. Also, for the care facility 10 shown in fig. 1, monitoring devices 31 are provided for each region 41 for portions other than residences 21, in a similar way as for residences 21, such that the inside of the facility can be monitored by monitoring devices 31.

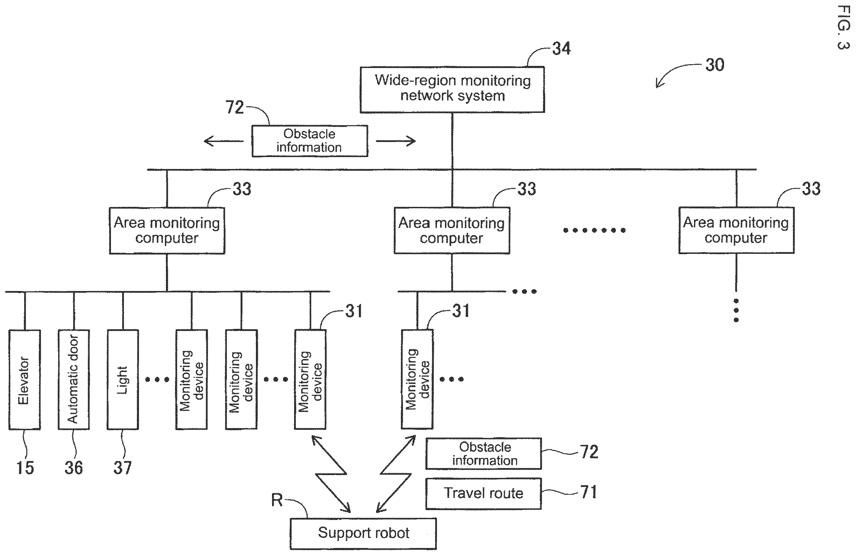

Fig. 3 shows the configuration of automatic driving system 30 of the embodiment. As shown in fig. 3, multiple monitoring devices 31 are connected to one area monitoring computer 33. Area monitoring computer 33 is connected to monitoring devices 31 via various types of communication equipment or the like (a router or hub, a LAN cable or fiber optic cable connected to the router or hub, and so on). Area monitoring computer 33, for example, forms a network that sends data (including the above image data) to monitoring devices 31 using communication based on TCP/IP (Transmission Control Protocol/Internet Protocol), via an original application of an application level of an upper level of the TCP/IP. Also, area monitoring computer 33 is provided with respect to each area made up of multiple regions 41 that are monitored by monitoring device 31. In the example shown in fig. 2, automatic driving system 30 is connected to monitoring computer 33 for which living room 23 of residence 21 is set as one area. Also, automatic driving system 30 is connected to area monitoring computer 33 for which dining room 24, passage 25, and hall 27 which goes from the entrance/exit of passage 25 to the elevator hall, are set as one area consisting of multiple regions. In a similar way, automatic driving system 30 is connected to area monitoring computer 33 which corresponds to a location other than residence 21, for example, crossover corridor 13.

Also, automatic driving system 30 is provided with wide-region monitoring network system 34 that performs overall control of the multiple area monitoring computers 33 which are provided corresponding to each area. Area monitoring computer 33 and wide-region monitoring network system 34 are configured, for example, mainly from a computer, and are provided with, for example, a database server for saving image data captured by monitoring devices 31, and a web server for viewing the image data that can be accessed externally. Wide-region monitoring network system 34 is connected to all the area monitoring computers 33 in care facility 10 by various communication equipment and the like, and forms a network through which data can be sent between devices. With automatic driving system 30, for example, area monitoring computers 33 form a local area network that manages multiple monitoring devices 31, and wide-region monitoring network system 34 forms a wide-region network that connects each local area network. This wide-region network is not limited to care facility 10, and may be formed from a MAN (Metropolitan Area Network) or WAN (Wide Area Network) that covers an entire city, or the entire region of the grounds of a large-scale facility. Thus, the wide-region network applied to automatic driving system 30 is not limited to only care facility 10, and may apply to a wide-region network corresponding to a town or city. Note that, support robot R sends various data for monitoring device 31 using wireless communication. This wireless communication is not limited to any particular type, and may be short-range wireless communication such as Bluetooth (registered trademark), wireless LAN communication using monitoring device 31 as an access point, and so on. Also, automatic driving system 30 of the present embodiment is a system for controlling the automatic driving of support robot R that moves within a wide-region network such that a care receiver H assisted by the support robot R is safely moved to a desired target location, using wide-region monitoring network system 34, area monitoring computers 33, and monitoring devices 31.

### Support robot R

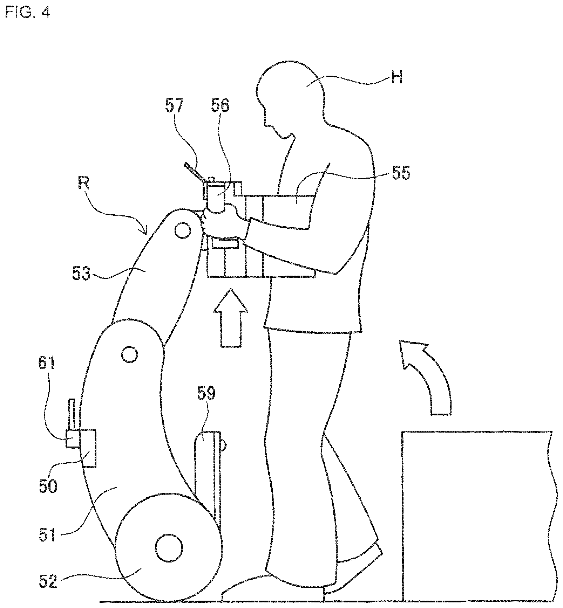

Next, support robot R is described with reference to fig. 4. With support robot R of the present embodiment shown in fig. 4, a pair of drive wheels 52 (only one of which is shown) is rotatably provided on a lower section of main body 51 built into which is control section 50. Support robot R is capable of forward/backward (the left/right direction in fig. 4) movement and left/right (the direction perpendicular to the surface of the page in fig. 4) movement on a floor while rotating drive wheels 52. Main body 51 extends up from a lower end on which drive wheels 52 are provided, and arm section 53 is rotatably supported on the upper end. Arm section 53 extends in one direction (up in fig. 4) from a base section supported on main body 51, and holding section 55 is provided on the end section of arm section 53. Holding section 55 is provided with a pair of wings that extend in a U-shape in one direction (rearwards in fig. 4) from the section connected to arm section 53, and the size of the opening of the U-shape can be changed by driving each of the wings. Holding section 55 is provided with handles 56 on both the left and right sides for care receiver H being assisted by support robot R to grip using their hands. Also, operation panel 57 for displaying information regarding care receiver H and for care receiver H to operate support robot R is provided on holding section 55. Further, control section 50 provided with communication section 61 which is capable of communication with an external device is connected to support robot R. Control section 50 controls communication section 61 to process data transmissions of operation instructions from a remote control operated by care receiver H and data transmissions with monitoring device 31 by wireless communication. Note that, support robot R is provided with footboard 59 on which the feet of care receiver H can ride, and is capable of moving with care receiver H riding on footboard 59 and not walking. As well as footboard 59, support robot R may be provided with a hip board that holds another body part of care receiver H, for example, the posterior. Also, support robot R may be provided with a camera or sensor, which is not shown in the drawings, for checking the safety of the surrounding area, the position of care receiver H, and so on. Support robot R configured as above moves inside care facility 10 assisting care receiver H to stand up, move, and so on.

Next, an example operation of support robot R will be described. As shown in fig. 2, when care receiver H sat, for example, on a bed, uses a remote control to perform a calling operation, support robot R moves close to care receiver H based on the calling operation. Control section 50 of support robot R processes image data of a rearside camera (not shown) to detect the position, posture, and so on of care receiver H. Control section 50 moves holding section 55 close to the chest of care receiver H based on the detection results. Care receiver H grabs handles 56 and leans onto holding section 55. When care receiver H, leaning on holding section 55, operates operation panel 57 to issue a standing up instruction, control section 50 starts operation to assist care receiver H to stand up from the bed. Control section 50, for example, memorizes height data of care receiver H set in advance, drives U-shaped holding section 55 according to the height data and posture and so on of care receiver H, and holds the chest of care receiver H from three directions, the front and the left and right sides, by holding section 55. Control section 50 drives arm section 53 and, as shown by the arrows in fig. 4, assists movement in a standing direction of care receiver H held by holding section 55. Care receiver H moves to a standing up position still assisted by support robot R.

Support robot R moves inside care facility 10 in a state assisting care receiver H. Travel routes 71 (refer to fig. 3) with various locations inside care facility 10 (bed, toilet, and so on) set as a departure location and a target location are memorized in control section 50. Control section 50 displays target locations on operation panel 57 such that care receiver H can select one. Control section 50 displays travel route 71 corresponding to the target location selected by care receiver H on operation panel 57. Also, support robot R starts automatic driving to the target location along travel route 71. Care receiver H, while checking the display on operation panel 57, starts walking assisted by support robot R. Control section 50 moves support robot R such that it assists care receiver H based on the weight transfer of care receiver H, width of footstep or the like of care receiver H based on preset height data, and so on. For example, support robot R may be provided with various sensors such as a gyrosensor, so that control section 50 detects the change in weight transfer of care receiver H. Control section 50 moves support robot R while driving holding section 55 and arm section 53 according to the detection results such that walking care receiver H does not fall over. Meanwhile, area monitoring computer 33 shown in fig. 3, receives travel route 71 from support robot R via monitoring device 31. In a case in which there is an obstacle or the like on the path of travel route 71, area monitoring computer 33 performs processing to change travel route 71 such that care receiver H is moved safely to the target location. Note that, control section 50 of support robot R does not have to store travel route 71 data in advance, it may acquire travel route 71 from another device. For example, control section 50 may store a list of target locations and map information data, and that information may be displayed on operation panel 57. Control section 50 may perform communication with area monitoring computer 33 to acquire travel route 71 to a target location selected by care receiver H based on the display of operation panel 57. With this kind of control section 50, since it is not necessary to store a travel route 71 for each departure location and target location in a memory or the like, the storage size required by control section 50 is reduced. Support robot R may also be configured to move based on operations of care receiver H. For example, support robot R may detect the amount by which care receiver H moves handles 56 forward or backward, and may drive the drive source (such as a motor) of drive wheels 52 forward and backward based on that amount. In this case, care receiver H is able to operate support robot R in the movement direction while checking the display of operation panel 57. Also, support robot R may drive automatically to the target location along travel route 71 with care receiver H riding on footboard 59.

### Presetting of target locations

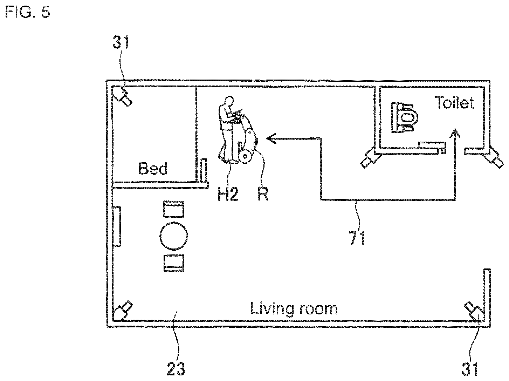

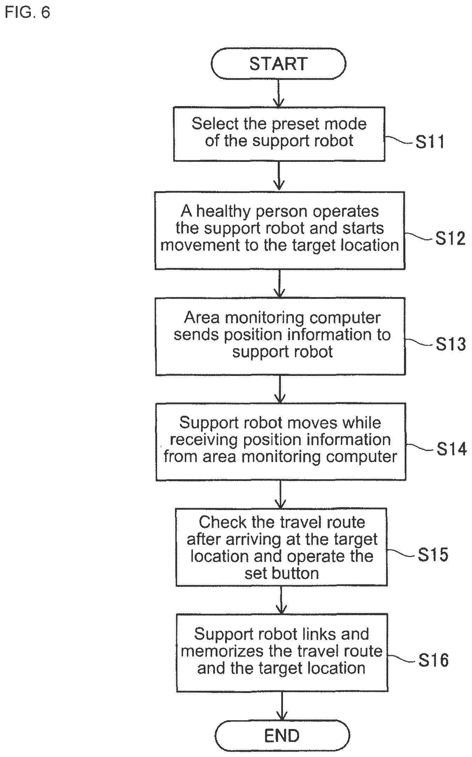

Next, processing of setting in advance travel route 71 for each target location to control section 50 is described with reference to figs. 5 and 6. Support robot R may be configured, for example, to store a travel result of a path, which is predicted to be a movement path of care receiver H and is traveled in advance by a healthy person as the operator, as travel route 71 in control section 50. In the description below, as an example of travel route 71, an example travel route 71 from the bed to the toilet as shown in fig. 5 is described. Fig. 6 is a flowchart showing the processing for support robot R to set travel route 71. Note that the processing procedure shown in fig. 6 is an example, and may be changed as appropriate.

In step S11 shown in fig. 6 (hereinafter abbreviated to S11, likewise for the other steps), healthy person H2 shown in fig. 5 operates operation panel 57 of support robot R and selects a mode (preset mode) for setting travel route 71 in advance. When preset mode is selected by healthy person H2, control section 50 starts processing to memorize the path support robot R moves after preset mode was selected.

Healthy person H2, after using the display of operation panel 57 to confirm that preset mode has been set, operates support robot R in a state being held by holding section 55, and starts movement from the bed (departure location) to the toilet (target location) (S12). This movement, for example, may be movement due to healthy person H2 pushing support robot R, or may be movement due to healthy person H2 moving handles 56 of support robot R such that support robot R moves along the desired path. As support robot R moves, control section 50 performs wireless communication with each monitoring device 31 (refer to fig. 2) to acquire position information. Area monitoring computer 33, when receiving communication from control section 50 via monitoring device 31, sends position information to support robot R (S13). Support robot R moves while control section 50 acquires position information from monitoring device 31 (S14). The position information of support robot R, for example, may be positions measured by area monitoring computer 33 using a signal (such as electromagnetic wave strength) received by monitoring device 31 with monitoring devices 31 set at various locations as wireless LAN access points, and then sent to support robot R. Alternatively, control section 50 may acquire position information using electromagnetic waves of a GPS (Global Positioning System) received via communication section 61. Also, area monitoring computer 33 may send GPS electromagnetic waves received from outside from monitoring device 31, which is inside, to support robot R. Note that, position information of support robot R may use other measurement technology, there are no particular restrictions. Further, for monitoring device 31, only a wireless antenna may be set in locations for which it is difficult to set a camera, such as the toilet or the bath, or various sensors (such as a distance sensor) which are capable of detecting position information may be set as monitoring device 31.

When healthy person H2 arrives at the target location, here the toilet, healthy person H2 checks travel route 71 from the bed to the toilet which they traveled using the display of operation panel 57, and if travel route 71 is correct, operates the set button (S15). Based on the operation of healthy person H2, control section 50 links the departure location and target location to travel route 71 and memorizes travel route 71. With this kind of method for setting travel route 71 in advance, it is possible for healthy person H2 to set travel route 71 considering the safety and so on of care receiver H. For example, healthy person H2 may set not the shortest route to the target location as travel route 71, but may set a safer route by choosing a course with a wide passage or a course with few steps as travel route 71. Healthy person H2 may also, for example, by setting the position at which care receiver H transfers to the toilet from support robot R as the target location, set an appropriate target location (travel route 71) to match the actions of care receiver H. Note that, the method of setting travel route 71 may be the shortest route connecting regions 41 which include the departure location and target location. Also, as a method for setting travel route 71, setting based on map data such as a floor map or layout of residence 21 may be performed without actually traveling. Also, the method of setting travel route 71 does not have to be a method which maintains a one-to-one relationship between departure locations and target locations. For example, control section 50 may use route 71 from the bed to the entrance/exit of passage 25 as shared data for travel routes 71 for which a portion is shared, as in the case of when the bed shown in fig. 2 is the departure location and there are multiple target locations outside residence 21. Also, control section 50 may combine multiple types of travel routes 71. Further, automatic driving system 30 may be configured such that a device other than support robot R, such as wide-region monitoring network system 34 or area monitoring computer 33 manages travel routes 71 using a database server.

### Support robot R movement

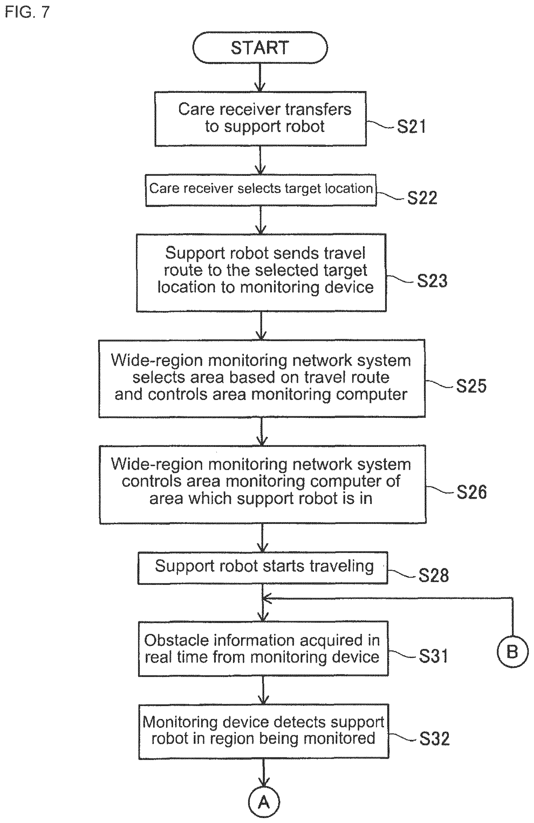

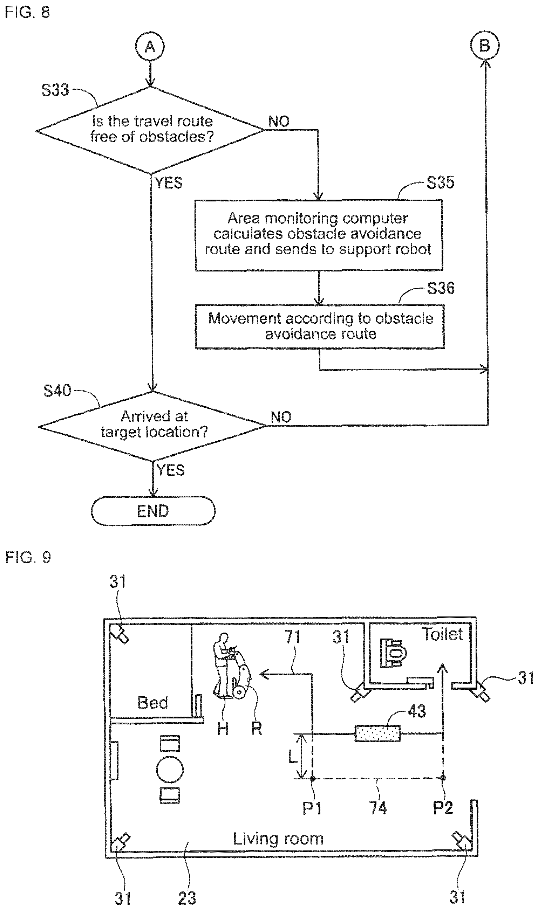

Next, processing performed by automatic driving system 30 with respect to support robot R that moves based on travel route 71 set according to the above steps is described with reference to figs. 7 and 8. First, in S21 shown in fig. 7, care receiver H, for example, while being assisted by support robot R, stands up from the bed and transfers from the bed to support robot R. Next, care receiver H selects a desired location, for example the toilet, as the target location, from target locations displayed on operation panel 57. Control section 50 of support robot R sends travel route 71 linked to the selected target location to area monitoring computer 33 via wireless communication with monitoring device 31 (S23, refer to fig. 3). Area monitoring computer 33 sends travel route 71 received from support robot R to wide-region monitoring network system 34. Wide-region monitoring network system 34 selects areas and area monitoring computers 33 corresponding to those areas based on travel route 71 (S25). Wide-region monitoring network system 34, from the selected area monitoring computers 33, starts control of area monitoring computer 33 of the area which support robot R is in (S26). For example, as shown in fig. 5, for movement within one area (living room 23), control is performed after selecting the one area monitoring computer 33 corresponding to living room 23. Movement for a travel route 71 straddling multiple areas is described later.

The selected area monitoring computer 33 (in this case, the one area monitoring computer 33 shown by fig. 5) receives information from support robot R via monitoring device 31 indicating that movement has started. Area monitoring computer 33 notifies wide-region monitoring network system 34 that support robot R has started moving and starts monitoring support robot R. When support robot R starts moving, area monitoring computer 33 performs control to start processing of image data with respect to each monitoring device 31 connected to the area monitoring computer 33. Each monitoring device 31 detects obstacles in region 41 from image data of region 41 captured in real time (S31). Here, obstacle includes, for example, objects that do not move such as tables, planters with plants growing in them, and dropped items, as well as things of which the position changes, such as people and wagons used to transport food.

Fig. 9 shows travel route 71 in which support robot R travels avoiding obstacle 43. Monitoring device 31 performs image processing with respect to image data captured by the camera, for example, image processing that compares the difference of image data that changes as time elapses, and calculates a value that represents information (all or at least one piece of information about the position, moving speed, moving direction, acceleration, size, and so on of obstacle 43) regarding obstacle 43. Monitoring device 31 that detected obstacle 43 in region 41 sends information related to obstacle 43 to area monitoring computer 33 as obstacle information (refer to fig. 3). Note that, the entire processing or a portion of the processing by which monitoring device 31 detects obstacle 43 may be performed by area monitoring computer 33 or wide-region monitoring network system 34. For example, automatic driving system 30 may send image data captured by monitoring device 31 or data on which pre-processing, such as correction and so on, has been performed, to area monitoring computer 33 and area monitoring computer 33 may perform processing to detect obstacle 43 from the sent data.

Also, in S32 shown in fig. 7, area monitoring computer 33 supplements the position of support robot R moving in region 41 being monitored by each monitoring device 31 of the area. For example, monitoring device 31, in a similar way to the detection processing of obstacle 43, detects in real time moving support robot R by performing image processing with respect to image data, and sends the position of support robot R to area monitoring computer 33. Alternatively, support robot R may send its own position information to area monitoring computer 33 in real time. Alternatively, area monitoring computer 33 may compare the results from the above two methods to obtain an even more accurate current position, or may supplement the position of support robot R using another method.

Next, area monitoring computer 33 judges whether an obstacle 43 is present on the path of travel route 71 based on obstacle information 72 sent from monitoring devices 31 (S33 of fig. 8). Area monitoring computer 33, in a case in which an obstacle 43 is present on the path (S33: NO), calculates an obstacle avoidance route to avoid obstacle 43, and sends the obstacle avoidance route to support robot R. Support robot R changes travel route 71 according to the obstacle avoidance route send from area monitoring computer 33 (S36).

For example, as shown in fig. 9, area monitoring computer 33 sends data indicating in which directions and to what extent changes are required to travel route 71 set in advance in order to avoidance obstacle 43 to support robot R as obstacle avoidance route 74. Area monitoring computer 33 instructs support robot R to follow obstacle avoidance route 74 in which the movement distance in the direction downwards in fig. 9 is extended by length L. Support robot R changes the display on operation panel 57 and changes travel route 71 based on obstacle avoidance route 74. Note that, the data format of obstacle avoidance route 74 is not limited particularly. For example, area monitoring computer 33 may, as shown in fig. 9, instruct support robot R with data indicating positions P1 and P2 at which support robot R changes its progress direction and indicating the progress direction after the change; for example, for position PI, data indicating changing the progress direction to the right as in fig. 9 is instructed to support robot R as obstacle avoidance route 74. Also, area monitoring computer 33 may send a travel route 71 onto which obstacle information 72, for example, the position, size, and so on of obstacle 43, has been mapped to support robot R as obstacle avoidance route 74. In this case, support robot R changes the display of travel route 71 on operation panel 57 to a display onto which obstacle 43 received from area monitoring computer 33 has been mapped, and changes travel route 71 based on obstacle avoidance route 74. By this, care receiver H is able to recognize in advance the correct position of obstacle 43 and so on using the display of operation panel 57, and thus is able to take appropriate measures. Also, in a case in which automatic driving is being performed with care receiver H riding on footboard 59, support robot R may automatically change travel route 71 based on obstacle avoidance route 74.

Also, for S33 processing, area monitoring computer 33, in a case in which no obstacles 43 are present on the path (S33: YES), judges whether support robot R has arrived at the target location (S40). In a case in which support robot R has not arrived at the target location (S40: NO), area monitoring computer 33 performs processing from S31 again. Thus, area monitoring computer 33 repeats the above processing (S31 to S40) until support robot R arrives at the target location. For example, when control section 50 of support robot R detects that support robot R has arrived at the target location based on position information and travel route 71, control section 50 informs care receiver H and notifies area monitoring computer 33 of that fact. Area monitoring computer 33 judges whether support robot R has arrived at the target location based on the information reported from support robot R. In a case in which support robot R has arrived at the target location (S40: YES), area monitoring computer 33 notifies wide-region monitoring network system 34 of that fact. Wide-region monitoring network system 34 ends processing with respect to support robot R. Care receiver H, after confirming that support robot R has stopped, transfers from support robot R to the toilet. Here, support robot R drives arm section 53 and holding section 55 to support care receiver H as they sit down on the toilet. Processing similar to the above is performed for movement from the toilet to the bed, so descriptions are omitted.

### Movement straddling areas

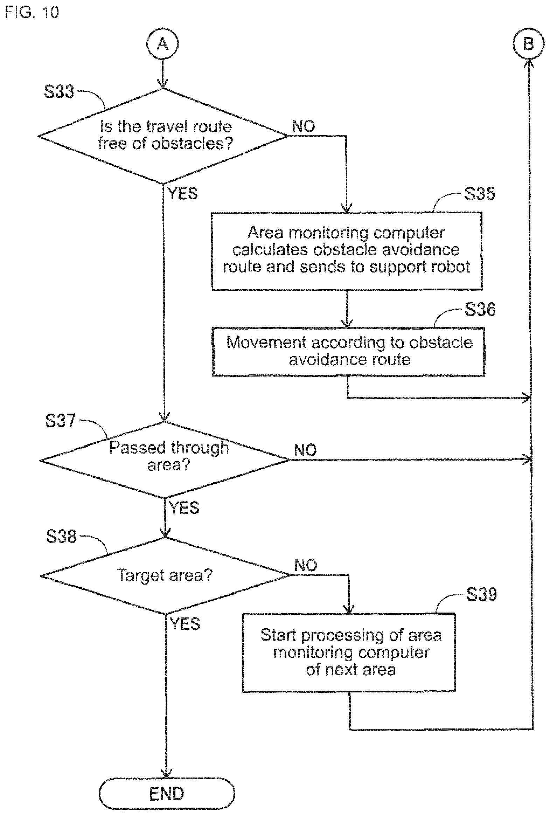

Next, movement for a travel route 71 that straddles multiple areas is described. Descriptions of processing performed by automatic driving system 30 are given below with reference to fig. 10 in addition to figs. 7 and 8. Fig. 10 shows processing performed with respect to fig. 8, that is, processing performed when support robot R passes through an area. Fig. 10 uses the same reference symbols as fig. 8 for similar processing. Also, when support robot R has entered the area in which the target location is, processing changes from that in fig. 10 to the processing performed as shown in fig. 8. Regarding description of fig. 7 processing, processing is similar to that given above when moving inside one area, so descriptions are omitted as appropriate.

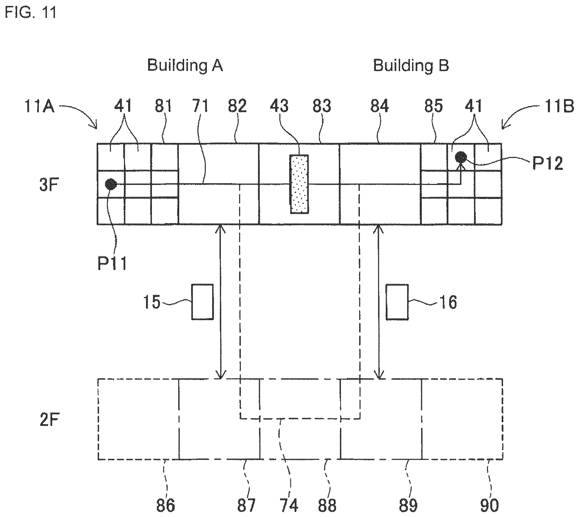

Also, as an example travel route 71, travel route 71 shown in fig. 1 from residence 21 of 3F of residential building 11A to residence 21 of 3F of residential building 11B is described. Fig. 11 shows schematically areas set in residential buildings 11A and 11B. A square shown in fig. 11 represents one area. Area 81 corresponding to living room 23 (refer to fig. 2) of residence 21, and area 82 corresponding to dining room 24, passage 25, and hall 27 are set in 3F of residential building 11A (building A). Also, in a similar way to residential building 11A, area 85 corresponding to living room 23 of residence 21, and area 84 corresponding to dining room 24, passage 25, and hall 27 are set in 3F of residential building 11B (building B). Also, connecting residential building 11A and 11B, that is, as an area connecting areas 82 and 84, area 83 corresponding to passageway 13 is set. Thus, in the example shown in fig. 11, areas 81 to 85 are provided in that order between residence 21 of 3F of residential building 11A, to residence 21 of 3F of residential building 11B. In a similar way, areas 86 to 90 are set in 2F of residential buildings 11A and 11B. Also, multiple regions 41 are set in each area 81 to 90 (some portions are not shown). Given the above, care receiver H and support robot R start movement along travel route 71 from departure location P11 inside residence 21 of 3F of residential building 11A to target location P12 inside residence 21 of 3F of residential building 11B. Described below is processing in a case in which obstacle 43 is detected in passageway 13 of 3F, that is, area 83. Note that, areas 81 to 90 shown in fig. 11 are one example, the shape of areas and the quantity of areas may be changed as appropriate, and areas may be set to partially overlap.

First, processing S21 to S23 shown in fig. 7 is performed similar to the above described processing. Next, in S25, wide-region monitoring network system 34 selects area monitoring computer 33 based on travel route 71. Travel route 71 is set to be the shortest route from residence 21 of 3F of residence building 11A to residence 21 of 3F of residence building 11B. Wide-region monitoring network system 34 selects areas 81 to 85 (refer to fig. 11) based on travel route 71 received from support robot R (S25). Wide-region monitoring network system 34, from the multiple selected area monitoring computers 33 corresponding selected areas 81 to 85, starts control of area monitoring computer 33 that manages the area which support robot R is in, in this case, area 81 (S26).

Area monitoring computer 33 of area 81 receives information from support robot R via monitoring device 31 indicating that movement has started (S28). Area monitoring computer 33 of area 81 notifies wide-region monitoring network system 34 that support robot R has started moving and starts monitoring support robot R. On the other hand, wide-region monitoring network system 34, from the area monitoring computers 33 of areas 81 to 85, controls area monitoring computers 33 of areas adjacent to area 81, which support robot R is traveling in. The setting range for these adjacent areas is set appropriately based on the position of areas at which travel route 71 and detour routes meet, the movement speed of support robot R (care receiver H), and so on. For example, wide-region monitoring network system 34 sets areas 82 to 84 as adjacent areas up to area 84 at which a detour route, which enables movement from area 82 to 3F of residential building 11B using elevators 15 and 16 and passing through 2F or 1F, meets the travel route. Wide-region monitoring network system 34, with respect to the area monitoring computers 33 of adjacent areas 82 to 84 performs control to detect obstacles in region 41 using monitoring devices 31 (S31). Also, area monitoring computer 33 of area 81 supplements the position of support robot R moving inside region 41 being monitored (S32).

Next, area monitoring computers 33 of areas 81 to 84 judge whether an obstacle 43 is present on the path of travel route 71 based on obstacle information 72 sent from monitoring devices 31 (S33 of fig. 10). In the example shown in fig. 11, because obstacle 43 is in area 83 (the area in which passageway 13 of 3F in fig. 1 is set), the area monitoring computer 33 corresponding to area 81, in which support robot R is currently traveling, calculates obstacle avoidance route 74 to avoid obstacle 43, and sends the obstacle avoidance route 74 to support robot R (S35 of fig. 10). As shown in fig. 3, each area monitoring computer 33 is connected to the others via a network, such that they can transmit obstacle information between them. For example, when a report is received indicating that an obstacle 43 was detected from area monitoring computer 33 of area 83, wide-region monitoring network system 34 performs control such that obstacle information 72 is sent from area monitoring computer 33 of area 83 to area monitoring computer 33 of area 81. Area monitoring computer 33 of area 81 calculates obstacle avoidance route 74 based on travel route 71 and obstacle information 72 of area 81, which area monitoring computer 33 itself is monitoring, and area 83, which is adjacent to area 82. The calculation result, for example, obstacle avoidance route 74, is a route that passes through passageway 13 of 2F using elevators 15 and 16, as shown in fig. 1. Also, area monitoring computer 33 of area 81 sends the calculated obstacle avoidance route 74 to wide-region monitoring network system 34. Wide-region monitoring network system 34 starts control of area monitoring computers 33 of the areas corresponding to obstacle avoidance route 74, in this case the three areas 87 to 89, which are passed through and which include area 88 (the area set as passageway 13 of 2F of fig. 1), as shown by the single-dot dashed lines in fig. 11. Wide-region monitoring network system 34, for example, performs control to send the changed travel route 71 to area monitoring computers 33 of areas 87 to 89. Note that, areas 86 and 90 shown by dashed lines in fig. 11 indicate areas for which control of is not started by wide-region monitoring network system 34 even for changed travel route 71. Also, wide-region monitoring network system 34 may calculate obstacle avoidance route 74 instead of area monitoring computer 33. For example, wide-region monitoring network system 34 may acquire obstacle information 72 from area monitoring computers 33 selected based on travel route 71, and may calculate obstacle avoidance route 74 based on the acquired obstacle information.

Support robot R changes travel route 71 according to obstacle avoidance route 74 sent from area monitoring computer 33 (S36 of fig. 10). Next, the processing of S31 and S32 shown in fig. 7 is performed again. Here, wide-region monitoring network system 34, for example, changes the adjacent areas of which obstacle information 72 is acquired from areas 82 to 84, to areas 87 to 89. In other words, wide-region monitoring network system 34 makes all the areas 87 to 89 of the 2F route that support robot R takes as a detour after travel route 71 has been changed, as target areas for monitoring for which obstacle information 72 is to be acquired. By this, automatic driving system 30, for example, repeatedly performs detection processing of obstacles 43 while support robot R is moving towards 2F, and in a case in which an obstacle 43 is detected on the 2F detour route as well, is able to change travel route 71 again to a route passing through, for example, 1F.

Processing of S31 and S32 of fig. 7 is performed, and in a case in which no obstacles 43 are present on the path (in fig. 10, S33: YES), it is judged whether support robot R has passed through area 81 (S37). This judgment may be performed by, for example, area monitoring computer 33 of area 81, or wide-region monitoring network system 34. In a case in which support robot R has not passed through area 81 (S37: NO), processing from S31 to S37 is repeated.

Also, in a case in which support robot R has passed through area 81 (S37: YES), it is judged whether the next area contains target location P12 (refer to fig. 11) (S38). This judgment may be performed, for example, by wide-region monitoring network system 34. Because the next area (in this case, area 82) does not contain target location P12 (S38: NO), wide-region monitoring network system 34 controls area monitoring computer 33 of area 82 and starts processing to supplement support robot R and so on (S39). Also, wide-region monitoring network system 34, based on when support robot R starts moving inside area 82, sets areas as adjacent areas based on area 82, in which support robot R is currently traveling. Wide-region monitoring network system 34, for example, changes the adjacent areas of which obstacle information 72 is acquired from areas 82 to 84, to areas 87 to 89.

Here, with automatic driving system 30 of the present embodiment, as well as monitoring devices 31, area monitoring computers 33, and wide-region monitoring network system 34, various devices provided in residential buildings 11A and 11B are connected, in order to assist movement of support robot R. To elaborate, as shown in figs. 2 and 3, area monitoring computers 33 are connected to elevators 15 and 16, automatic door 36, lights 37, and so on, as well as to monitoring devices 31, such devices being able to be controlled via a network. Note that, the control method of elevators 15 and 16 and so on, for example, the control data format, the data communication type, the application for remote control, and the type of network connection, are not particularly limited.

For example, area monitoring computer 33 of area 82 may turn on and off lights 37 that are provided in the ceiling of hall 27 based on the movement of support robot R from passage 25 of residence 21 through hall 27 to elevator 15 as shown in fig. 2. Also, area monitoring computer 33 of area 82 is connected to a control device (not shown) of elevator 15 via a network and moves elevator 15 to 3F to match the movement of support robot R. Area monitoring computer 33 of area 82, when detecting that care receiver H and support robot R have got into elevator 15 from image data of the camera of monitoring device 31 provided in elevator 15, performs control to close the doors of elevator 15 and move elevator 15 to 2F. Then, when elevator 15 arrives at 2F, area monitoring computer 33 of area 82 holds the doors of elevator 15 open until care receiver H and support robot R have got out. As given above, automatic driving system 30 of the present embodiment is configured to control various devices provided in residential buildings 11A and 11B based on the movement of support robot R, and is configured to enable care receiver H to move to a target location more safely and reliably. Note that, elevator 16, in a similar way to elevator 15, is controlled to match the movement of support robot R by area monitoring computer 33 of area 84. Also, area monitoring computer 33 of area 82, in cases in which there are no obstacles 43 and so on, controls automatic doors 36 as passageway 13 of 3F is passed through. Also, control of elevator 15 may be performed in a unified manner by wide-region monitoring network system 34 instead of area monitoring computer 33.

Further, automatic driving system 39 repeats processing S31 to S39 shown in figs. 7 to 10 until support robot R is inside area 85, which contains the target location. When support robot R has entered area 85 (in fig. 10, S38: YES), automatic driving system 30 performs processing from S31 of fig. 7 and performs processing from S33 shown in fig. 8 instead of that from fig. 10. In other words, automatic driving system 30 performs the same processing as for when movement is performed in one area (processing S31 to S40 of figs. 7 and 8) until support robot R arrives at target location P12. In this manner, automatic driving system 30 performs automatic driving to target location P12 by performing control of support robot R across areas.

### Movement outside

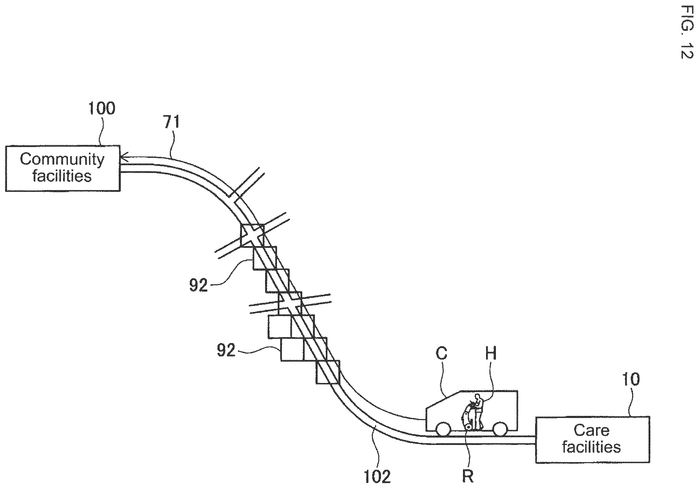

Next, description is given of automatic driving system 30 of the present embodiment when applied to control of automatic driving outside. Described below is one example of automatic driving performed outside, in a case in which care receiver H and support robot R move while loaded on robot car C. As shown in fig. 1, robot car C is parked in the grounds of care facility 10. Wide-region monitoring network system 34, for example, when care receiver H inside residence 21 selects an outside location from the target locations of support robot R (for example, community facility 100 shown in fig. 12), as well as assisting movement of support robot R from residence 21 to outside the entrance/exit of residential buildings 11A and 11B, assists the movement from the entrance/exit of residential buildings 11A and 11B to robot car C. Robot car C, for example, is configured to be controlled by remote operation from area monitoring computer 33 via wireless communication with monitoring devices 31 provided outside. Also, robot car C is configured to be able to be loaded with care receiver H in a state being assisted by support robot R. For example, robot car C is configured to open the back door automatically, lower the vehicle height, and create a slope, based on control from area monitoring computer 33. Area monitoring computer 33 controls robot car C based on the movement of support robot R, and assists support robot R and care receiver H getting into robot car C. When care receiver H has finished getting into robot car C, care receiver H performs, for example, operation on operation panel 57 to switch support robot R to drive mode. Based on the operation of care receiver H, support robot R switches control such that communication with monitoring devices 31 is performed via robot car C. For example, support robot R may perform exchanging of various data with robot car C by close proximity wireless communication such as Bluetooth (registered trademark).

Robot car C, with care receiver H and support robot R loaded, for example, drives automatically along travel route 71 to move from care facility 10 to community facility 100 along road 102, as shown in fig. 12. Road 102 may be a private road within the grounds of care facility 10 or a public road on which general vehicles can travel. Multiple areas 92 in which obstacles 43 are monitored by monitoring devices 31 are provided on road 102. Wide-region monitoring network system 34 (refer to fig. 3), from among areas 92 set on road 102, selects areas 92 required for travel route 71 from care facility 10 to community facility 100, and starts control of area monitoring computers 33 that correspond to the selected areas 92. In a case in which this movement is across a wide region, wide-region monitoring network system 34 may be configured to operate in conjunction with multiple systems configured in a similar manner. For example, automatic driving system 30 may be configured such that wide-region monitoring network systems 34 are provided for each of care facility 10, road 102, and community facility 100, and each wide-region monitoring network system 34 may send various information (such as position information of support robot R, obstacle information 72, and travel routes 71) to the other wide-region monitoring network systems 34.

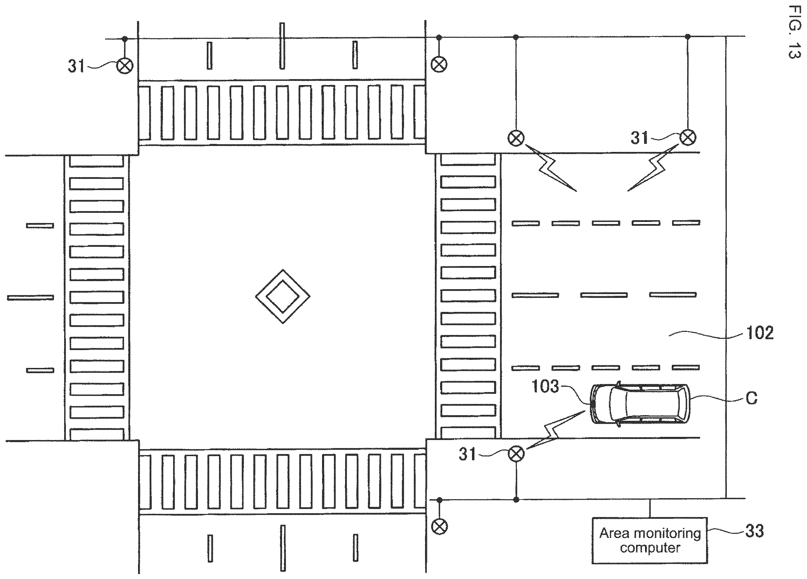

Fig. 13 shows an example of the configuration of automatic driving system 30 provided at an intersection of road 102. As shown in fig. 13, area monitoring computer 33 of area 92 is connected to multiple monitoring devices 31 for monitoring obstacles in regions 41 (refer to fig. 2) set in, for example, an intersection of road 102. Robot car C performs communication with area monitoring computer 33 via monitoring devices 31. Communication between robot car C and monitoring devices 31 is not particularly limited, and may be, for example, Dedicated Short Range Communication (DSRC) or light beacons used in the field of road traffic systems known as Intelligent Transport Systems (ITS), or various communication methods used in mobile communication such as 3G or 3G. Each monitoring device 31 detects obstacles (such as pedestrians or items which have fallen from cars) in region 41 in real time, and sends that information as obstacle information 72 to area monitoring computer 33. Area monitoring computer 33 calculates obstacle avoidance route 74 based on travel route 71 and obstacle information 72 sent by monitoring devices 31 and sends obstacle avoidance route 74 to robot car C.

Robot car C changes travel route 71 according to obstacle avoidance route 74 from area monitoring computer 33. Robot car C, for example, changes the lane in which it is traveling or the intersection at which to turn based on obstacle avoidance route 74. Robot car C drives automatically to the target location while changing travel route 71 based on obstacle avoidance route 74. Also, robot car C is provided with one or multiple obstacle sensors for detecting obstacles around the vehicle body of robot car C. Robot car C drives automatically avoiding obstacles on road 102 based on information of obstacles which are around the vehicle body of robot car C detected by obstacle sensors 103 in addition to obstacle avoidance route 74 from area monitoring computer 33. In this way, automatic driving system 30 controls automatic driving outside using robot car C.

Also, automatic driving system 30 performs control to automatically park robot car C at community facility 100, which is the target location. Automatic driving system 30 is provided with monitoring devices 31 in a car park (not shown) in the grounds of community facility 100, or a car park near community facility 100. When robot car C arrives at an area 92 set on road 102 close to community facility 100, automatic driving system 30 searches in advance for a car park with an empty parking space. For example, area monitoring computer 33 of an area being monitored that includes a car park detects whether a parking space is empty by processing images of monitoring devices 31, and sends the information to area monitoring computer 33 of the area in which robot car C is currently traveling. Alternatively, area monitoring computer 33 may acquire empty parking space information from a car park management system. Area monitoring computer 33 provided in community facility 100, for example, when robot car C arrives at an entrance of community facility 100, performs control to assist support robot R and care receiver H get out of car. Also, when getting out of the car is complete, area monitoring computer 33 controls driverless robot car C and moves robot car C to a car park with an empty parking space. Area monitoring computer 33 monitoring the car park, when robot car C arrives, parks robot car C in an empty parking space while detecting and avoiding obstacles such as pedestrians and other cars in the car park using monitoring devices 31. In this manner, automatic driving system 30 is able to park robot car C automatically. Note that, control of support robot R inside community facility 100 by automatic driving system 30 is similar to control in care facility 10, which was the departure location, so descriptions are omitted. Also, automatic driving system 30, when care receiver H goes home from community facility 100, may perform control to move parked robot car C to an entrance of community facility 100 based on the remote commands and so on of care receiver H. Also, automatic driving system 30 may perform control for the parking of robot car C in care facility 10 and movement to an entrance in a similar way as to community facility 100.

The following effects are obtained according to the embodiment described in detail above.

### Effect 1

Automatic driving system 30 of this embodiment controls support robot R that drives automatically inside care facility 10 holding care receiver H. With automatic driving system 30, monitoring devices 31 corresponding to each of multiple regions 41 set in residence 21 and so on of care facility 10 are provided, and each monitoring device 31 detects obstacles 43 in regions 41. An area monitoring computer 33 of automatic driving system 30 is provided to correspond to one area for which multiple regions 41 are set, and area monitoring computers 33 acquire obstacle information 72 with the position and so on of obstacles 43 detected by each of the multiple monitoring devices 31, and are controlled overall by wide-region monitoring network system 34. Area monitoring computer 33 calculates obstacle avoidance route 74 for support robot R to avoid obstacles 43 from obstacle information 72, and sends obstacle avoidance route 74 to support robot R that is traveling in the area. Support robot R drives automatically avoiding obstacles 43 while changing travel route 71 based on obstacle avoidance route 74.

With this configuration, even if operating support robot R is difficult for care receiver H, because support robot R drives automatically to the target location, care receiver H is able to move to the desired target location without receiving assistance from a caregiver or the like. Also, if there is an obstacle 43 on the path of travel route 71, it is not necessary for care receiver H to think of a route to avoid the obstacle 43, or for care receiver H to operate support robot R. Also, even in cases where there is an obstacle 43 outside the range which care receiver H can check from the departure location, such as the example shown in fig. 1 where a situation has arisen in which passageway 13 of 3F cannot be passed due to an obstacle 43, support robot R can judge by itself based on obstacle avoidance route 74 and move along a travel route 71 that avoids obstacle 43. Thus, it is not necessary for care receiver H to return by the path by which they came to avoid obstacle 43, or to receive assistance from a caregiver or the like to avoid obstacle 43. This allows care receiver H to perform everyday movements without receiving assistance from a caregiver or the like, and to move freely by using support robot R.

Also, because support robot R can avoid obstacles 43 based on obstacle avoidance route 74 from area monitoring computer 33, which is an external device, it is possible to have a configuration in which support robot R itself is not equipped with devices (such as obstacle sensors) to detect obstacles 43. Also, because obstacle avoidance route 74 is calculated by area monitoring computer 33, it is not necessary for support robot R to perform complicated processing for calculating obstacle avoidance route 74. As a result, the construction and functions of support robot R are simple, which enables a reduction in manufacturing costs of support robot R.

Also, with care facility 10, it is supposed that multiple support robots R move at the same time. In this case, multiple support robots R can use wide-region monitoring network system 34, area monitoring computers 33, and monitoring devices 31 as a shared system. Thus, according to automatic driving system 30 of the present embodiment, due to the system to control multiple support robots R being a shared system, the overall manufacturing costs of automatic driving system 30 are reduced.

### Effect 2

Monitoring devices 31 perform image processing in real time on image data captured of regions 41 to detect obstacles 43, calculate at least one piece of information out of the position, moving speed, moving direction, acceleration, and size of the detected obstacles 43, and send the calculation result to area monitoring computer 33 as obstacle information 72. With this kind of configuration, information expected to be calculated as obstacle information 72 can be set with respect to monitoring devices 31 based on the characteristics of obstacles 43 which are expected to be detected in the location where monitoring device 31 is set. Also, area monitoring computer 33, when movement straddles multiple areas 81 to 90 (refer to fig. 11), calculates obstacle avoidance route 74 from obstacle avoidance information 72 of area corresponding to travel route 71, which is the planned route of support robot R, and sends obstacle avoidance route 74 to support robot R. Thus, automatic driving system 30 is able to instruct an appropriate obstacle avoidance route 74 to support robot R based on travel route 71.

### Effect 3

In the case shown in fig. 11, area monitoring computer 33 of area 81, in which support robot R is traveling, calculates obstacle avoidance route 74 based on obstacle information 72 of areas 82 to 84, which are adjacent to area 81, which area monitoring computer 33 itself is monitoring, and based on travel route 71 to the target location of support robot R. The setting range for these adjacent areas is set based on the position of areas at which travel route 71 and detour routes meet, the movement speed of support robot R (care receiver H), and so on. Thus, area monitoring computer 33 of area 81 is able to detect in advance obstacles 43 in areas 82 to 84, through which support robot R is supposed to pass, and can calculate obstacle avoidance route 74 that avoids those detected obstacles 43.

### Effect 4

Area monitoring computer 33 sends obstacle avoidance route 74, which is a travel route 71 onto which, for example, obstacle information 72 (the position and so on of obstacle 43) has been mapped, to support robot R. Support robot R displays travel route 71 based on obstacle avoidance route 74 received from area monitoring computer 33 on operation panel 57. By this, care receiver H is able to recognize in advance the correct position of obstacle 43 and so on using the display of operation panel 57, and thus is able to take appropriate measures.

### Effect 5

As well as being connected to monitoring devices 31, area monitoring computer 33 is connected to elevators 15 and 16 via a network so as to be able to control them (refer to figs. 2 and 3). For example, area monitoring computer 33 of area 82 is connected to a control device of elevator 15 via a network and controls elevator 15 to match the movement of support robot R. With this kind of configuration, care receiver H is able to move without operating conveyance devices such as elevators 15 and 16 provided on the path of travel route 71.

### Effect 6

Wide-region monitoring network system 34 judges whether support robot R has passed through area 81 (S37 of fig. 10), controls area monitoring computer 33 of area 82, which is the next area, and starts processing to supplement support robot R and so on (S39). Also, wide-region monitoring network system 34 changes the adjacent areas of which obstacle information 72 is acquired from areas 82 to 84, to areas 87 to 89, based on area 82 in which support robot R is traveling. In other words, wide-region monitoring network system 34 controls area monitoring computers 33 based on the area in which support robot R is traveling. Thus, automatic driving system 30 reduces the overall processing load of the system by performing processing of obstacle information 72 and so on for only area monitoring computers 33 based on the area in which support robot R is traveling.

### Effect 7

Support robot R of the present embodiment, by performing automatic driving that avoids obstacles 43 by following obstacle avoidance route 74 calculated by area monitoring computer 33 based on obstacle information 72, moves care receiver H safely and appropriately to the target location.

### Effect 8

Support robot R automatically drives care receiver H held in a safer manner by the chest of care receiver H being held from three directions, the front, left, and right directions, by U-shaped holding section 55.

### Effect 9

For preset processing of target locations, when healthy person H2 arrives at the target location, healthy person H2 checks the travel route 71 that they themselves moved on using the display of operation panel 57 and operates the set button (S15 of fig. 6). Control section 50 of support robot R links the departure location and target location to travel route 71 and memorizes travel route 71. Also, for movement of care receiver H in a held state, support robot R performs automatic driving based on travel route 71 selected by care receiver H at operation panel 57, and obstacle avoidance route 74. With this kind of configuration, it is possible for healthy person H2 to set travel route 71 in advance considering the safety and so on of care receiver H. Also, support robot R, while moving based on travel route 71 set by healthy person H2, moves care receiver H safely to the target location by performing automatic driving that avoids obstacles 43.

### Effect 10

Robot car C is provided with obstacle sensor 103 for detecting obstacles around the vehicle body of robot car C (refer to fig. 13). Robot car C drives automatically avoiding obstacles on road 102 based on information of obstacles which are around the vehicle body of robot car C detected by obstacle sensors 103 in addition to obstacle avoidance route 74 from area monitoring computer 33. By this, robot car C moves care receiver H safely to the target location.

Support robot R and robot car C are each one example of an automatic traveling machine. Elevators 15 and 16 are an example of a conveyance device. Obstacle avoidance route 74 is an example of obstacle information and an obstacle avoidance route calculated based on obstacle information. Healthy person H2 who operates support robot R is an example of an operator.

Meanwhile, it goes without saying that the invention is not limited to the above-mentioned embodiment and may be improved and modified in various ways without departing from the scope of the invention. For example, with respect to the above embodiment, area monitoring computer 33 may send obstacle information 72 to support robot R without calculating obstacle avoidance route 74. In this case, it is desirable for support robot R to calculate obstacle avoidance route 74 based on the sent obstacle information 72. Also, monitoring device 31 is not necessarily provided with a dedicated camera that supplements support robot R, the configuration may be such that a camera with another use, such as a security camera, is used.

Also, support robot R and robot car C may be configured to drive automatically along travel route 71 based on information detected by obstacle sensors 103 or the like provided on support robot R and robot car C, without support robot R and robot car C receiving control from automatic driving system 30. Also, automatic driving system 30 may be configured to control multiple support robots R and robot cars C.

Also, care receiver H mentioned herein is not limited to a person with a permanent walking impairment, for example, care receiver H includes people who have temporarily lowered walking ability and who are recovering with rehabilitation. For example, automatic driving system 30 is not limited to moving care receiver H to a target location, automatic driving system 30 may control automatic driving of a support robot R that assists the exercise of care receiver H for rehabilitation purposes. Also, the automatic driving machines mentioned herein are not limited to support robot R and robot car C, for example, they may be industrial robots for assisting the movement of components in a factory. In this case, automatic driving system 30, for example, may control industrial robots in a factory and perform automatic driving to avoid obstacles. Also, conveyance devices mentioned herein are not limited to elevators 15 and 16, and may include other conveyance devices that are capable of conveying support robot R, robot car C, and so on.

Technical ideas arising from the above described contents are given next. (i) A support robot that travels with a care receiver in a held state, the support robot comprising: a holding section that holds the care receiver; wheels that move the support robot with the care receiver in a state held by the holding section; an operation panel that displays selectable target locations to the care receiver; and a control section that drives the wheels to perform automatic driving to the target location based on a travel route linked to the target location selected by the care receiver using the operation panel.

With this configuration, even if operating the support robot is difficult for the care receiver, because the support robot drives automatically to the target location, the care receiver is able to move to the desired target location without receiving assistance from a caregiver or the like.

### Reference Signs List

10: care facility; 21: residence; 31: monitoring device; 33: area monitoring computer; 34: wide-region monitoring network system; 41: inside area; 43: obstacle; 72: obstacle information; 74: obstacle avoidance route; H: care receiver; R: support robot

## Claims

1. An automatic driving system (30) comprising:
a monitoring device (31) that is provided in each of multiple regions (41) which are set inside an area, and that monitors an obstacle (43) in the corresponding region (41);
an area monitoring computer (33) that is provided to correspond to the area, and that acquires obstacle information (72) regarding the obstacle (43) which is detected by each of the multiple monitoring devices (31);
a wide-region monitoring network system (34) that performs overall control of multiple of the area monitoring computers (33); and
an automatic traveling machine (R, C) that runs in the area, and that drives automatically avoiding the obstacle (43) based on the obstacle information (72),
**characterised in that** the monitoring device (31) detects the obstacle (43) inside the area from image data captured inside the area in real time, calculates a value corresponding to information of at least one of the position, moving speed, moving direction, moving acceleration, and size of the obstacle (43), and sends the calculation result to the area monitoring computer (33) as the obstacle information (72), and
the area monitoring computer (33) sends the obstacle information (72) to the automatic traveling machine (R, C) based on the area through which the automatic traveling machine (R, C) travels.

2. The automatic driving system (30) according to claim 1,
wherein the area monitoring computer (33) calculates an obstacle avoidance route (74) based on the obstacle information (72) acquired by the area monitoring computer (33) and the obstacle information (72) acquired by the area monitoring computer (33) of the adjacent area, and the travel route (71) of the automatic traveling machine (R, C) to a target location, and sends the obstacle avoidance route (74) to the automatic traveling machine (R, C).

3. The automatic driving system (30) according to claim 2,
wherein the area monitoring computer (33) maps the obstacle information (72) to the travel route (71) and sends the travel route (74) with mapped obstacle information (72) to the automatic traveling machine (R, C).

4. The automatic driving system (30) according to any one of the claims 1 to 3,
further provided with a conveyance device (15, 16) that is able to convey the automatic traveling machine (R),
wherein the area monitoring computer (33) conveys the automatic traveling device (R) by driving the conveyance device (15, 16) based on the travel state of the automatic traveling machine (R) that the monitoring devices (31) monitor.

5. The automatic driving system (30) according to any one of the claims 1 to 4,
wherein the wide-region monitoring network system (34) selects the areas through which the automatic traveling machine (R, C) will pass in advance based on the travel route (71) of the automatic traveling machine (R, C) to the target location, and, from among the area monitoring computers (33) corresponding to the selected areas, controls the area monitoring computers (33) based on the area in which the automatic traveling machine (R, C) is currently traveling.

6. The automatic driving system (30) according to any one of the claims 1 to 5, wherein the automatic traveling machine (R, C)
comprises a support robot (R) that is provided with a holding section (55) that holds a care receiver (H), and that travels in a state with the care receiver (H) held by the holding section (55).

7. The automatic driving system (30) according to claim 6,
wherein the support robot (R), in a case in which the obstacle information (72) is not sent, memorizes a route from a departure location to a target location and links the route to a target location as a travel route (71) by an operator (H2) performing operation in advance, and in a case in which the obstacle information (72) is sent, drives automatically with the care receiver (H) being held, based on the travel route (71) linked to the target location selected by the care receiver (H), and the obstacle information (72).

8. The automatic driving system (30) according to claim 6 or 7, wherein
the automatic traveling machine (R, C)
comprises a robot car (C) on which the support robot (R) holding a care receiver (H) is capable of being loaded,
wherein the robot car (C) is provided with an obstacle sensor (103) that detects an obstacle (43) near the robot car (C), and, in a state loaded with the support robot (R) and the care receiver (H), drives automatically avoiding the obstacle (43) based on the obstacle information and the information detected by the obstacle sensor (103).

## Patentansprüche

1. Automatisches Fahrsystem (30), umfassend:
eine Überwachungsvorrichtung (31), die in jeder von mehreren Regionen (41) vorgesehen ist, die in einem Bereich angeordnet sind, und die ein Hindernis (43) in der entsprechenden Region (41) überwacht;
einen Bereichsüberwachungscomputer (33), der derart vorgesehen ist, dass er dem Bereich entspricht, und der Hindernisinformationen (72) bezüglich des Hindernisses (43) erfasst, das von jeder der mehreren Überwachungsvorrichtungen (31) erfasst wird;
ein Weitregionen-Überwachungsnetzwerksystem (34), das eine Gesamtsteuerung mehrerer der Bereichsüberwachungscomputer (33) ausführt; und
ein automatisches Fahrgerät (R, C), das in dem Bereich läuft und das automatisch fährt und das Hindernis (43) basierend auf den Hindernisinformationen (72) vermeidet,
**dadurch gekennzeichnet, dass**
die Überwachungsvorrichtung (31) das Hindernis (43) innerhalb des Bereiches aus Bilddaten, die innerhalb des Bereichs in Echtzeit erfasst werden, einen Wert berechnet, der Informationen der Position und/oder der Bewegungsgeschwindigkeit und/oder der Bewegungsrichtung und/oder der Bewegungsbeschleunigung und/oder der Größe des Hindernisses (43) entspricht, und das Berechnungsergebnis als Hindernisinformationen (72) an den Bereichsüberwachungscomputer (33) sendet, und
der Bereichsüberwachungscomputer (33) die Hindernisinformationen (72) an das automatische Fahrgerät (R, C) basierend auf dem Bereich sendet, durch das sich das automatisch Fahrgerät (R, C) bewegt.

2. Automatisches Fahrsystem (30) nach Anspruch 1,
bei dem der Bereichsüberwachungscomputer (33) eine Hindernisvermeidungsroute (74) auf der Grundlage der von dem Bereichsüberwachungscomputer (33) erfassten Hindernisinformationen (72) und der von dem Bereichsüberwachungscomputer (33) erfassten Hindernisinformationen (72) des angrenzenden Bereichs und die Fahrtroute (71) des automatischen Fahrgeräts (R, C) zu einem Zielort berechnet und die Hindernisvermeidungsroute (74) an das automatische Fahrgerät (R, C) sendet.

3. Automatisches Fahrsystem (30) nach Anspruch 2,
bei dem der Bereichsüberwachungscomputer (33) die Hindernisinformationen (72) der Fahrtroute (71) zuordnet und die Fahrtroute (74) mit den zugeordneten Hindernisinformationen (72) an das automatische Fahrgerät (R, C) sendet.

4. Automatisches Fahrsystem (30) nach einem der Ansprüche 1 bis 3,
weiterhin ausgestattet mit einer Beförderungsvorrichtung (15, 16), die das automatische Fahrgerät (R) befördern kann,
wobei der Bereichsüberwachungscomputer (33) die automatische Fahrvorrichtung (R) durch Antreiben der Beförderungsvorrichtung (15, 16) basierend auf dem Fahrzustand des automatischen Fahrgeräts (R) befördert, das die Überwachungsvorrichtungen (31) überwachen.

5. Automatisches Fahrsystem (30) nach einem der Ansprüche 1 bis 4,
bei dem das Weitregionen-Überwachungsnetzwerksystem (34) die Bereiche, die das automatische Fahrgerät (R, C) durchfahren wird, im Voraus auf der Grundlage der Fahrtroute (71) des automatischen Fahrgeräts (R, C) zu dem Zielort wählt, und aus den Bereichsüberwachungscomputern (33), die den ausgewählten Bereichen entsprechen, die Bereichsüberwachungscomputer (33) basierend auf dem Bereich steuert, in dem sich das automatische Fahrgerät (R, C) aktuell bewegt.

6. Automatisches Fahrsystem (30) nach einem der Ansprüche 1 bis 5,
bei dem das automatische Fahrgerät (R, C) einen Stützroboter (R) umfasst, der mit einem Halteabschnitt (55) versehen ist, der einen Pflegeempfänger (H) hält, und der sich in einem Zustand bewegt, in dem der Pflegeempfänger (H) von dem Halteabschnitt (55) gehalten wird.

7. Automatisches Fahrsystem (30) nach Anspruch 6,
bei dem der Stützroboter (R) in einem Fall, in dem die Hindernisinformationen (72) nicht gesendet werden, eine Route von einem Abfahrtsort zu einem Zielort einliest und die Route mit einem Zielort als Fahrtroute (71) verknüpft, indem eine Bedienperson (H2) eine Tätigkeit im Voraus ausführt, und in einem Fall, in dem die Hindernisinformationen (72) gesendet werden, automatisch mit dem gehaltenen Pflegeempfänger (H) basierend auf der mit dem Zielort verknüpften Fahrtroute (71), die von dem Pflegeempfänger (H) gewählt wurde, und der Hindernisinformationen (72) fährt.

8. Automatisches Fahrsystem (30) nach Anspruch 6 oder 7,
bei dem das automatische Fahrgerät (R, C) ein Roboterauto (C) umfasst, auf das der Stützroboter (R), der einen Pflegeempfänger (H) hält, geladen werden kann,
wobei das Roboterauto (C) mit einem Hindernissensor (103) versehen ist, der ein Hindernis (43) in der Nähe des Roboterautos (C) erfasst, und in einem Zustand, in dem er mit dem Stützroboter (R) und dem Pflegeempfänger (H) beladen ist, automatisch fährt und das Hindernis (43) basierend auf den Hindernisinformationen und den vom Hindernissensor (103) erfassten Informationen meidet.

## Revendications

1. Système de conduite automatique (30) comprenant :
un dispositif de surveillance (31) qui est disposé dans chacune de multiples régions (41) qui sont positionnées à l'intérieur d'une zone, et qui surveille un obstacle (43) dans la région (41) correspondante,
un ordinateur de surveillance de zone (33) qui est prévu pour correspondre à la zone et qui acquiert des informations d'obstacle (72) concernant l'obstacle (43) qui est détecté par chacun des multiples dispositifs de surveillance (31),
un système de réseau de surveillance de large région (34) qui effectue un contrôle global de multiples ordinateurs parmi les ordinateurs de surveillance de zone (33), et
une machine de déplacement automatique (R, C) qui se déplace dans la zone et qui se conduit automatiquement en évitant l'obstacle (43) sur la base des informations d'obstacle (72),
**caractérisé en ce que** le dispositif de surveillance (31) détecte l'obstacle (43) à l'intérieur de la zone à partir de données d'image prises à l'intérieur de la zone en temps réel, calcule une valeur correspondant aux informations d'au moins un critère parmi la position, la vitesse de déplacement, la direction de déplacement, l'accélération de déplacement et la taille de l'obstacle (43), et envoie le résultat de calcul à l'ordinateur de surveillance de zone (33) en tant qu'informations d'obstacle (72), et
l'ordinateur de surveillance de zone (33) envoie les informations d'obstacle (72) à la machine de déplacement automatique (R, C) sur la base de la zone au travers de laquelle se meut la machine de déplacement automatique (R, C).

2. Système de conduite automatique (30) selon la revendication 1,
dans lequel l'ordinateur de surveillance de zone (33) calcule une route d'évitement d'obstacles (74) fondée sur les informations d'obstacle (72) acquises par l'ordinateur de surveillance de zone (33) et sur les informations d'obstacle (72) acquises par l'ordinateur de surveillance de zone (33) de la zone adjacente, ainsi que la route de déplacement (71) de la machine de déplacement automatique (R, C) jusqu'à un emplacement cible, et il envoie la route d'évitement d'obstacles (74) à la machine de déplacement automatique (R, C).

3. Système de conduite automatique (30) selon la revendication 2,
dans lequel l'ordinateur de surveillance de zone (33) mappe les informations d'obstacle (72) sur la route de déplacement (71) et envoie la route de déplacement (71) comportant les informations d'obstacle (72) mappées à la machine de déplacement automatique (R, C).

4. Système de conduite automatique (30) selon l'une quelconque des revendications 1 à 3,
doté en outre d'un dispositif de transport (15, 16) qui peut transporter la machine de déplacement automatique (R),
dans lequel l'ordinateur de surveillance de zone (33) transporte le dispositif de déplacement automatique (R) en pilotant le dispositif de transport (15, 16) sur la base de l'état de déplacement de la machine de déplacement automatique (R) que surveillent les dispositifs de surveillance (31).

5. Système de conduite automatique (30) selon l'une quelconque des revendications 1 à 4,
dans lequel le système de réseau de surveillance de large région (34) sélectionne à l'avance les zones au travers desquelles passera la machine de déplacement automatique (R, C) sur la base de la route de déplacement (71) de la machine de déplacement automatique (R, C) jusqu'à l'emplacement cible, et, parmi les ordinateurs de surveillance de zone (33) correspondant aux zones sélectionnées, contrôle les ordinateurs de surveillance de zone (33) sur la base de la zone dans laquelle la machine de déplacement automatique (R, C) est en cours de déplacement.

6. Système de conduite automatique (30) selon l'une quelconque des revendications 1 à 5, dans lequel
la machine de déplacement automatique (R, C) comprend un robot de support (R) qui est doté d'une section de soutien (55) qui soutient un bénéficiaire de soins (H) et qui se déplace avec le bénéficiaire de soins (H) soutenu par la section de soutien (55).

7. Système de conduite automatique (30) selon la revendication 6,
dans lequel le robot de support (R), dans un cas où les informations d'obstacle (72) ne sont pas envoyées, mémorise une route depuis un emplacement de départ jusqu'à un emplacement cible et relie la route à un emplacement cible en tant que route de déplacement (71) grâce à un opérateur (H2) effectuant l'opération à l'avance, et dans un cas dans lequel les informations d'obstacle (72) sont envoyées, il pilote automatiquement avec le bénéficiaire de soins (H) soutenu, sur la base de la route de déplacement (71) liée à l'emplacement cible sélectionné par le bénéficiaire de soins (H), et des informations d'obstacle (72).

8. Système de conduite automatique (30) selon la revendication 6 ou la revendication 7, dans lequel
la machine de déplacement automatique (R, C) comprend une voiture robot (C) sur laquelle peut être chargé le robot de support (R) soutenant un bénéficiaire de soins (H),
dans lequel la voiture robot (C) est munie d'un détecteur d'obstacle (103) qui détecte un obstacle (43) à proximité de la voiture robot (C), et, lorsqu'elle est chargée avec le robot de support (R) et le bénéficiaire de soins (H), elle pilote automatiquement en évitant l'obstacle (43) sur la base des informations d'obstacle et des informations détectées par le détecteur d'obstacle (103).
